# EUROPÄISCHE PATENTSCHRIFT

(11) **EP 1 835 238 B1**
(45) Veröffentlichungstag und Bekanntmachung des Hinweises auf die Patenterteilung: **16.05.2018**
(21) Anmeldenummer: 07004395.5
(22) Anmeldetag: 03.03.2007
(51) Int. Cl.: F24F 7/013, F24F 13/14

(54) **Luftkanal mit schwerkraftbetätigter Rückschlagklappe**
Air duct with a non-return valve activated by gravity
Canal d'air équipé d'un clapet de recul activé par gravitation

(30) Priorität: 15.03.2006 DE 202006004838 U
(43) Veröffentlichungstag der Anmeldung: 19.09.2007
(73) Patentinhaber: MAICO Elektroapparate-Fabrik GmbH, 78056 Villingen-Schwenningen (DE)
(72) Erfinder: Stricker, Klaus, 78658 Zimmern o. R. (DE); Pietsch, Lars, 78056 Villingen-Schwenningen (Obereschach) (DE); Hann, Johann, 78054 Villingen-Schwenningen (DE)
(74) Vertreter: Dietz, Christopher Friedrich

(56) Entgegenhaltungen:
- DE-A1- 19 919 701
- DE-C- 497 929
- US-A- 2 541 665
- US-A- 2 638 836
- US-A- 2 687 687

## Beschreibung

Die Erfindung betrifft einen Luftkanal mit Rückschlagklappenvorrichtung zum Verschließen eines Luftwegs, mit mindestens einer Absperrklappe, die von einer im Luftweg strömenden Luftströmung entgegen einer Schließkraft geöffnet wird.

Derartige Luftkanäle mit Rückschlagklappenvorrichtungen sind bei Wandeinbauventilatoren bekannt. Ein einen Luftweg bildender Anschlussstutzen ist mit einer Rückschlagklappe versehen, die mittels einer Feder in Schließstellung gedrängt wird. Die DE 497929 C1 offenbart einen derartigen Luftkanal. Wird der Ventilator in Betrieb genommen, so bewirkt die Luftströmung ein Öffnen der Absperrklappe gegen die Federkraft. Bei ausgeschaltetem Ventilator schließt sich die Absperrklappe durch die Federkraft. Tritt ein Überdruck, zum Beispiel durch eine Windlast auf ein Entlüftungsrohrsystem, auf, an das der vorstehend erwähnte Ventilator angeschlossen ist, so wird dieser aufgrund der geschlossenen Rückschlagklappe nicht weitergeleitet. Die Absperrklappe der bekannten Einrichtung legt sich in Schließstellung mit ihrem umlaufenden Randbereich gegen eine Dichtfläche des Luftwegs. Durch den Flächenkontakt kann es zu Funktionsstörungen, beispielsweise einem Haften des Klappenrandes, kommen, sodass die Funktion der Absperrklappe nicht mehr gewährleistet ist. Insbesondere bei mit Fremdstoffen belasteten Luftströmen kommt es aufgrund einer Verschmutzung zu dem erwähnten Effekt. Die US 2 687 687 A1 offenbart einen Luftkanal mit den Merkmalen des Oberbegriffs von Anspruch 1. Der Erfindung liegt die Aufgabe zugrunde, einen Luftkanal mit Rückschlagklappenvorrichtung der eingangs genannten Art zu schaffen, der funktionssicher arbeitet, sicher und hinreichend dicht schließt und einfach herstellbar und leicht zusammenbaubar ist.

Diese Aufgabe wird erfindungsgemäß durch einem Luftkanal mit den Merkmalen von Anspruch 1 gelöst. Bevorzugte Ausführungsformen sind in den abhängigen Ansprüchen definiert. Es wird vorgeschlagen, dass der Luftkanal ein zu seiner Längserstreckung abgeschrägt verlaufendes Ende aufweist, dass die Absperrklappen an dem Ende angeordnet sind und dass - in Einbaulage des Luftkanals - jede Absperrklappe aufgrund des abgeschrägten Endes zur Vertikalen derart geneigt angeordnet ist, dass eine Gewichtskraftkomponente ihres Gewichts die Schließkraft erzeugt. Der erfindungsgemäße mit Rückschlagklappenvorrichtung versehene Luftkanal kann zum Beispiel als Rohrstück für den Einsatz in einem lufttechnischen Gerät oder in einer lufttechnischen Installation zur Verfügung stehen. Es ist auch denkbar, dass der Luftkanal Teil einer lufttechnischen Einrichtung, beispielsweise eines Ventilators ist, zum Beispiel eines Wandeinbauventilators oder Deckeneinbauventilators, wobei der Luftkanal insbesondere einen Anschlussstutzen des Ventilators bildet. Erfindungsgemäß wird der Luftweg des Luftkanals in einer Strömungsrichtung durch die beiden Absperrklappen verschlossen und in der anderen Luftströmungsrichtung werden die Absperrklappen durch den Luftstrom in Offenstellung gebracht, sodass der Luftweg vom Luftstrom passiert werden kann. Die Absperrklappen sind jeweils um eine Schwenkachse schwenkbar gelagert, die sich jeweils seitlich an der Absperrklappe befindet. In der Schließstellung kontaktieren die Absperrklappen den Luftweg in radialer Richtung nicht, sondern halten zu diesem einen Abstand (Spiel) ein. Dieses Spiel ist hinreichend klein gewählt, wodurch trotz des durch das Spiel resultierenden Spalts eine ausreichende, die Funktionen nicht schädlich beeinträchtigende Dichtwirkung vorliegt. Durch die insbesondere in radialer Richtung berührungslos arbeitenden Absperrklappen können Verklebungen, Verklemmungen und so weiter nicht auftreten, d.h., die Absperrklappen lassen sich leichtgängig bewegen und sind stets mit nur sehr geringer Kraft zu öffnen. Um die Schließstellung zu definieren, sind Anschlagvorrichtungen vorgesehen, d.h., in einer definierten Zone legt sich jede Absperrklappe mit einem ihr zugeordneten Element axial oder etwa axial gegen ein Element des Luftwegs, wobei die Fläche und/oder Länge der aufeinander liegenden Elemente sehr klein gewählt ist, sodass es nicht zu Funktionsstörungen, zum Beispiel durch Verkleben oder dergleichen, kommt. Vorgesehen ist die Ausbildung einer Punktauflage, die ein oder mehrere Punktkontakte beinhalten kann oder eine nur kurze Linienauflage. Bevorzugt ist, dass die Länge der Klappenränder wesentlich größer ist, als die Länge der Auflagen, sodass also nur in sehr kleinen Zonen - im Vergleich zu den Klappenrändern - ein Aneinanderliegen von Teilen in der Schließstellung der Absperrklappen vorliegt. Im Zuge dieser Anmeldung ist unter dem Begriff "axial" eine Richtung zu verstehen, die der Luftströmungsrichtung im Luftkanal entspricht. Der Begriff "radial" definiert eine Richtung, die quer zur axialen Richtung verläuft. Der Luftkanal weist ein zu seiner Längserstreckung abgeschrägt verlaufendes Ende auf, an dem die Absperrklappen angeordnet sind. Sie liegen demgemäß unmittelbar am Ende des Luftkanals, und zwar in einer zur Vertikalen derart geneigten Stellung, dass eine Gewichtskraftkomponente ihres Gewichts die Schließkraft erzeugt. Aufgrund der Gravitation neigen die Absperrklappen dazu, ihre Schließstellung einzunehmen. Durch die Luftströmung in eine Richtung im Luftweg wird die Schließkraft überwunden und die Absperrklappen werden in eine Öffnungsstellung gedrängt. Findet keine Luftströmung im Luftweg statt, so schließen die Absperrklappen aufgrund ihres Gewichts selbsttätig. Erfolgt eine Luftströmung in die andere (entgegengesetzte) Richtung, so trifft sie auf die sich in Schließstellung befindenden Absperrklappen. Aufgrund der Anordnung der Absperrklappen am Ende des Luftkanals lassen sich die Absperrklappen sehr einfach montieren, da der Montagebereich sehr gut zugänglich ist. Ferner führt die Anordnung der Absperrklappen am Ende des Luftkanals zu einer einfachen Konstruktion, die problemlos herstellbar ist. Die durch das Gewicht erzeugte Eigenschließkraft der Absperrklappen führt gegenüber den aus dem Stand der Technik bekannten Federlösungen zum Erzeugen der Schließkraft zu einem geringeren Druckverlust im Luftkanal, da bei Federn mit wachsender Federauslenkung die Schließkraft ansteigt, die von dem durch die Luftströmung aufgebrachten Druck überwunden werden muss. Der Dichtbereich der Absperrklappen ist aufgrund ihrer endseitigen Anordnung am Luftkanal einfach und effektiv ausbildbar. Die Offenstellung der Absperrklappen wird durch den Luftkanal nicht behindert, da sich die Absperrklappen beim Öffnen nach außen vom Ende des Luftkanals wegbewegen. Weist der Luftkanal eine Luftfördereinrichtung mit Flügelrad auf, um die Luftströmung zu erzeugen, so führt das Zusammenwirken der Flügel des Flügelrads mit der Luftklappe zu einer Drehfrequenz, wobei durch die Schrägstellung der Luftklappe jedoch eine Geräuschminderung bewirkt wird. Vorzugsweise werden der Luftkanal und/oder die Absperrklappen aus Kunststoff, insbesondere im Kunststoffspritzverfahren, hergestellt. Alternativ oder teilweise ist auch eine Fertigung aus Blech denkbar.

Nach einer Weiterbildung der Erfindung ist vorgesehen, dass die Klappenfläche, insbesondere Klappenebene, der sich in Schließstellung befindenden Absperrklappen in einer oder etwa in einer von einer das Ende bildenden Randkante des Luftkanals aufgespannten Fläche, insbesondere Ebene, liegt. Sofern die Klappenebene der geschlossenen Absperrklappen aufgrund des Einliegens der Absperrklappen im Innern des Luftkanals geringfügig versetzt zur Randkante des Luftkanals liegt, bilden die Klappenebene und die von der Randkante des Luftkanals aufgespannte Ebene parallele Ebenen, die einen geringfügigen Abstand zueinander aufweisen.

Nach einer Weiterbildung der Erfindung ist vorgesehen, dass - in Einbaulage des Luftkanals - die Abschrägung des Endes und/oder die Neigung der Absperrklappe derart ausgebildet ist, dass - in Strömungsrichtung des Luftkanals betrachtet - der untere Bereich des Endes und/oder der Absperrklappe gegenüber dem oberen Bereich des Endes und/oder der Absperrklappe in Luftströmungsrichtung versetzt liegt, wobei eine Luftströmung in der genannten Luftströmungsrichtung zu einem Öffnen der Absperrklappe führt. Die so definierte, geneigte Anordnung der Absperrklappen stellt sicher, dass eine Gewichtskraftkomponente ihres Gewichts zur Erzeugung der erwähnten Schließkraft führt.

Es ist vorteilhaft, wenn die Absperrklappen seitlich angeordnete Schwenkachsen aufweisen, die - in Einbaulage des Luftkanals - gegenüber der Vertikalen derart geneigt verlaufen, dass ihr unterer Bereich gegenüber ihrem oberen Bereich in Luftströmungsrichtung versetzt liegt, wobei eine Luftströmung in der genannten Luftströmungsrichtung zu einem Öffnen der Absperrklappen führt. Nach einer Weiterbildung der Erfindung ist vorgesehen, dass die bereits erwähnten Anschlagvorrichtungen die Schließstellung der Absperrklappen definieren, wobei an einer Wandung des Luftwegs Anschläge und an den Absperrklappen in Schließstellung gegen Anschläge tretende Gegenanschläge vorgesehen sind. Insbesondere treffen Anschlag und Gegenanschlag im Wesentlichen axial aufeinander. Durch die beschriebene Konstruktion der Anschlagvorrichtungen ist ein Verklemmen oder Verkleben der Absperrklappen (zum Beispiel durch mit Haarspray belastete Luft) ausgeschlossen. Eine der Absperrklappen kann mindestens ein Zusatzgewicht zur Vergrößerung der Gewichtskraftkomponente aufweisen. Das Zusatzgewicht kann vorzugsweise durch einen verdickten und/oder versteiften Klappenrand gebildet werden. Es ist auch zusätzlich oder alternativ möglich, das Zusatzgewicht durch den Gegenanschlag auszubilden. Zusatzgewichte können insbesondere auch durch Materialanhäufung realisiert sein.

Die maximale Öffnungsstellung der Absperrklappen ist jeweils durch Anlage eines Klappenanschlags der Absperrklappe an einem Klappengegenanschlag des Luftwegs definiert. In der maximalen Öffnungsstellung treten nur Klappenanschlag und Klappengegenanschlag aufeinander, wobei diese beiden Elemente hinsichtlich ihres Kontakts sehr klein ausgebildet sind, wodurch eine Leichtgängigkeit gewährleistet ist und erhalten bleibt. Der Öffnungswinkel Φ in der maximalen Öffnungsstellung der Absperrklappen ist kleiner 90°, vorzugsweise cirka 60° bis 80°. Der Öffnungswinkel Φ ist zwischen der Schließstellung und der maximalen Öffnungsstellung jeder Absperrklappe ausgebildet.

Nach einer Weiterbildung der Erfindung ist vorgesehen, dass der Querschnitt des Luftkanals kreisförmig, etwa kreisförmig, oval oder mehreckig, insbesondere rechteckig, ausgebildet ist und dass die beiden Absperrklappen einen dem Querschnitt entsprechenden Grundriss aufweisen. Sofern der Querschnitt des Luftkanals kreisförmig ausgebildet ist, führt die Abschrägung des Endes dazu, dass die so gebildete Öffnung oval gestaltet ist und demzufolge die diese Öffnung verschließenden Absperrklappen einen Grundriss aufweisen, der ebenfalls eine dementsprechende ovale Form besitzt. Da sich beide Absperrklappen am Ende des Luftkanals befinden und derart dem Querschnitt des Luftkanals zugeordnet sind, dass jede der Absperrklappen einen Teilquerschnitt des Querschnitts öffnet beziehungsweise verschließt, ist eine seitliche Nebeneinanderanordnung der Absperrklappen gegeben. Strömungstechnisch liegen die Absperrklappen in Parallelschaltung zueinander. Erfindungsgemäß sind zwei Absperrklappen vorgesehen, deren Schwenkachsen benachbart, vorzugsweise parallel zueinander liegen. Die beiden Schwenkachsen liegen jeweils an einem Seitenrand der zugeordneten Absperrklappe, wobei die verbleibenden freien Randzonen jeweils einen Klappenrand bilden. Die die Schwenkachsen aufweisenden Seitenränder der beiden Absperrklappen liegen so nahe beieinander, dass insbesondere in Schließstellung nur ein Minimalspalt zwischen ihnen ausgebildet ist. Alternativ können sich die Absperrklappen dort auch berühren oder einander überlappen.

Nach einer Weiterbildung der Erfindung ist vorgesehen, dass die beiden Absperrklappen jeweils einen etwa halbkreisförmigen, einen Klappenrand bildenden Außenumrissbereich aufweisen und zusammen den im Querschnitt kreisförmigen oder etwa im Querschnitt kreisförmigen Luftweg verschließen.

Insbesondere ist vorgesehen, dass die beiden Absperrklappen identisch ausgebildet sind.

Schließlich ist es vorteilhaft, wenn der Luftkanal ein Anschlusskanal eines Ventilators, insbesondere Wandeinbauventilators, ist.

Die Erfindung betrifft ferner einen Ventilator, insbesondere einen Wandeinbauventilator, mit einem Luftkanal, so wie er vorstehend beschrieben ist.

Die Zeichnungen veranschaulichen die Erfindung anhand eines Ausführungsbeispiels und zwar zeigt:
- Figur 1: einen Luftkanal mit Rückschlagklappenvorrichtung in Schließstellung an einem Einbauwandventilator,
- Figur 2: einen Luftkanal mit geöffneter Rückschlagklappenvorrichtung nach einem anderen Ausführungsbeispiel,
- Figur 3: eine Detailansicht der Lagerung zweier maximal geöffneter Absperrklappen der Rückschlagklappenvorrichtung,
- Figur 4: eine Draufsicht auf eine Absperrklappe,
- Figur 5: einen Einbauventilator mit Luftkanal und Rückschlagklappenvorrichtung in Deckeneinbaulage und
- Figur 6: einen Querschnitt durch einen an einen Lüftungskanal angeschlossenen, mit Rückschlagklappenvorrichtung ausgestatteten Luftkanal.

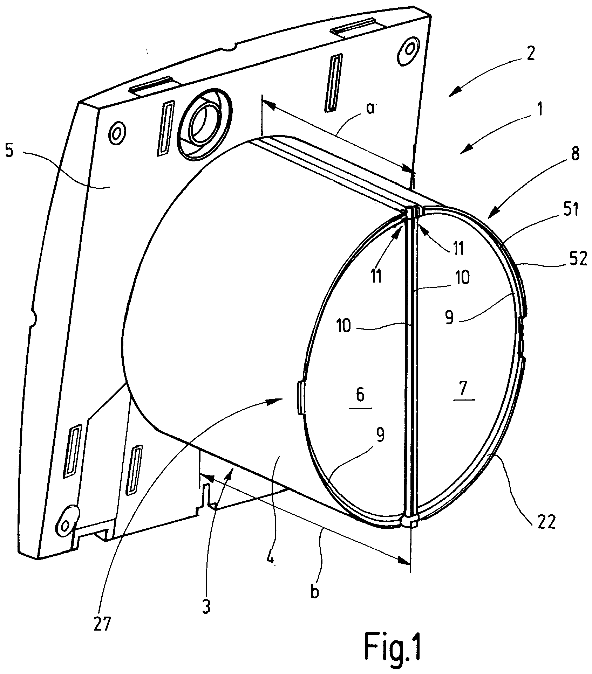

Die Figur 1 zeigt eine lufttechnische Einrichtung 1, die als Wandeinbauventilator 2 ausgebildet ist. Der Wandeinbauventilator 2 weist einen Luftkanal 3 auf, der als Anschlussstutzen dient und einen Luftweg 4 bildet. Innerhalb des Luftkanals 3 ist ein elektrischer Antriebsmotor mit einem Lüfterrad angeordnet, wobei das Lüfterrad im Betrieb Luft durch einen Lufteinlass einer Wandabdeckung 5 ansaugt und über den Luftkanal 3 in ein an diesen angeschlossenen Abluftkanal oder dergleichen fördert. Am Luftkanal 3 befinden sich zwei Absperrklappen 6 und 7, die zusammen mit dem Luftweg 4 eine Rückschlagklappenvorrichtung 8 bilden. Die beiden Absperrklappen 6 und 7 sind am freien Ende 51 des Luftkanals 3 angeordnet. Sie befinden sich - angrenzend an die Randkante 52 des Luftkanals 3 - innerhalb des Luftweges 4 und weisen jeweils einen etwa halbkreisförmigen Außenumrissbereich 9 und einen geradlinig verlaufenden Außenumrissbereich 10 auf. Die beiden Absperrklappen 6 und 7 sind in der Figur 1 in Schließstellung dargestellt; sie verschließen den im Querschnitt kreisförmigen Luftweg 4, wobei aufgrund eines später noch näher zu erläuternden Schrägverlaufs des Endes 51 des Luftkanals 3 eine geringfügige Abweichung von der Kreisform vorliegt. Die beiden Absperrklappen 6 und 7 weisen eine diese Abweichung berücksichtigende Gestalt auf.

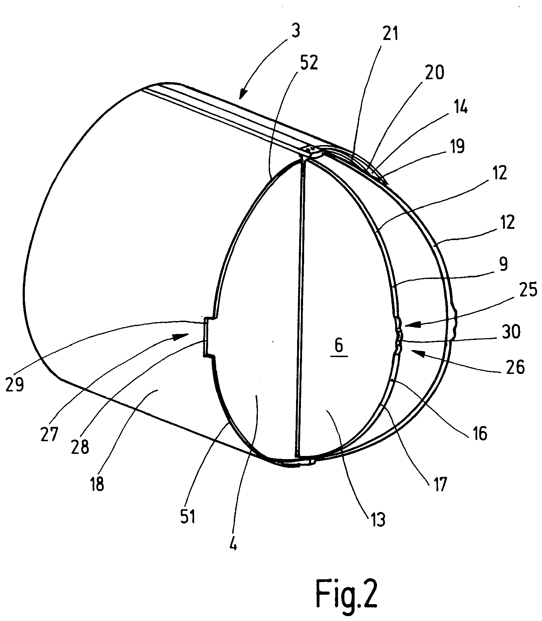

Die beiden Absperrklappen 6 und 7 besitzen im Bereich (insbesondere in Verlängerung) ihrer geradlinig verlaufenden Außenumrissbereiche 10 jeweils Schwenkachsen 11, sodass sie - wie es aus der Figur 2 hervorgeht - im Betrieb, das heißt beim Auftreten einer Luftströmung, durch den geförderten Luftstrom in ihre maximale Offenstellung vom Luftkanal 3 wegschwenken können und daher den Luftweg 4 freigeben. Das Ausführungsbeispiel der Figur 2 unterscheidet sich von dem Ausführungsbeispiel der Figur 1 lediglich dadurch, dass in der Figur 2 ein Luftkanal 3 mit Rückschlagklappenvorrichtung 8 alleinig wiedergegeben ist, also kein Wandeinbauventilator ausgebildet wird. Sollte sich bei ausgeschaltetem oder eingeschaltetem Wandeinbauventilator 2 oder bei einer vorhandenen oder nicht vorhandenen Luftströmung im Luftkanal 3 ein hinreichend großer Gegendruck im Abluftkanal oder dergleichen aufbauen, so sorgt bei den Ausführungsbeispielen der Erfindung die entsprechende Luftströmung dafür, dass durch diese das Schließen der Absperrklappen 6 und 7 erfolgt und damit eine Abschottung vorliegt. Eine Luftrückströmung wird hierdurch erfolgreich vermieden.

Aus den Figuren 1 und 2 ist ersichtlich, dass die beiden Absperrklappen 6 und 7 gegenüber der horizontalen Richtung schräg verlaufend angeordnet sind. Entsprechend schräg verläuft auch die Randkante 52 des Luftkanals 3. Der Winkel gegenüber der Horizontalen beträgt cirka 6° bis 45°, insbesondere 8° bis 25°, vorzugsweise etwa 8,5°. Er wird dadurch bewirkt, dass der Luftkanal 3 im oberen Bereich das Maß a und im unteren Bereich das Maß b aufweist, wobei a kürzer als b ist. Dies hat zur Folge, dass jede der beiden Absperrklappen 6 und 7 beim Nichtvorliegen einer Luftströmung durch eine Gewichtskraftkomponente ihres jeweiligen Gewichts selbsttätig geschlossen wird, das heißt, die jeweilige Gewichtskraftkomponente erzeugt eine Schließkraft auf die entsprechende Absperrklappe 6, 7, sodass keine zusätzlichen Schließmittel, wie beispielsweise Federn oder dergleichen, erforderlich sind.

Da die beiden Absperrklappen 6 und 7 identisch ausgebildet sind, wird nachstehend zumeist nur noch auf die Ausgestaltung der Absperrklappe 6 eingegangen. Entsprechendes gilt dann in gleicher Weise für die Ausgestaltung der Absperrklappe 7.

Anhand des Ausführungsbeispiels der Figur 2 - das im Hinblick auf den Luftkanal 3 und die Rückschlagklappenvorrichtung 8 dem Ausführungsbeispiel der Figur 1 entspricht - wird nachstehend auf den Klappenrand 12 der Absperrklappe 6 näher eingegangen, der den erwähnten Außenumrissbereich 9 bildet. Der Klappenrand 9 ist verdickt ausgebildet und schließt einstückig an ein ebenes, dünneres Klappenblatt 13 an. In der Schließstellung der Klappe 6 (Figur 1) liegt der Klappenrand 12 einer Schließfläche 14 (Figur 2) des Luftwegs 4 mit geringem Spiel gegenüber. Der Klappenrand 12 weist - gemäß Figur 2 - einen Radial-Klappenrand 16 und einen Axial-Klappenrand 17 auf, wobei der Radial-Klappenrand 16 mit dem Axial-Klappenrand 17 einen Winkel von vorzugsweise 90° einschließt. Der Luftweg 4 weist an seiner Wandung 18 im Bereich des Endes 51 eine ringstufenförmige Ausnehmung 19 auf, die dazu führt, dass die Schließfläche 14 eine radiale Schließfläche 20 und eine axiale Schließfläche 21 besitzt. Die radiale Schließfläche 20 schließt mit der axialen Schließfläche 21 einen Winkel von vorzugsweise 90° ein.

Die Anordnung ist nun derart getroffen, dass in Schließstellung der Absperrklappe 6 der Radial-Klappenrand 16 der radialen Schließfläche 20 mit Spiel, also unter Ausbildung eines Radialspalts 20 gegenüberliegt. Der Axial-Klappenrand 17 liegt der axialen Schließfläche 21 ebenfalls mit Spiel gegenüber, sodass ein Axialspalt ausgebildet wird, wobei Radialspalt 22 und Axialspalt winkelförmig zueinander verlaufen und daher einen Winkelspalt bilden. Obwohl zwischen der Absperrklappe 6 und dem Luftweg 4 der umlaufende Winkelspalt besteht, ist eine hinreichende Dichtwirkung gegeben, da das Spaltmaß relativ klein ist und durch die Winkelbildung auch noch labyrinthartig wirkt.

In der Mittelzone 25 des Klappenrands 9 weist die Klappe 6 gemäß der Figur 2 eine Anschlagvorrichtung 26 auf, die die Schließstellung der Absperrklappe 6 definiert. Hierzu ist die Wandung 18 des Luftwegs 4 mit einer randoffenen Ausnehmung 27 versehen, wobei der Ausnehmungsgrund 28 einen Anschlag 29 bildet. Der Anschlag 29 befindet sich auf einem derartigen Axialniveau, dass er der Absperrklappe 6 in Schließstellung gegenüberliegt. Das Niveau des Anschlags 29 liegt - in axialer Richtung gesehen - mit Abstand zur axialen Schließfläche 21, derart, dass auch im Bereich der Anschlagvorrichtung 26 der Axialspalt und ein (verkleinerter) Abschnitt des Radialspalts 22 ausgebildet wird. Am Radial-Klappenrand 16 der Absperrklappe 6 befindet sich ein in radialer Richtung weisender Gegenanschlag 30, der gegen den Anschlag 19 in Schließstellung der Absperrklappe 6 axial anliegt. Die Anordnung ist vorzugsweise derart ausgebildet, dass nur eine Punkt- oder Mehrpunktauflage oder eine Linienauflage vorliegt.

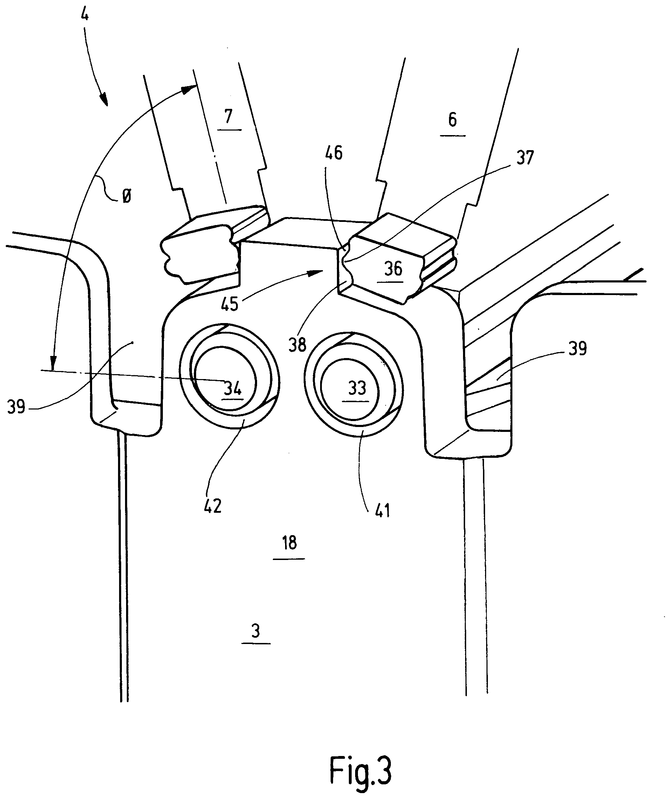

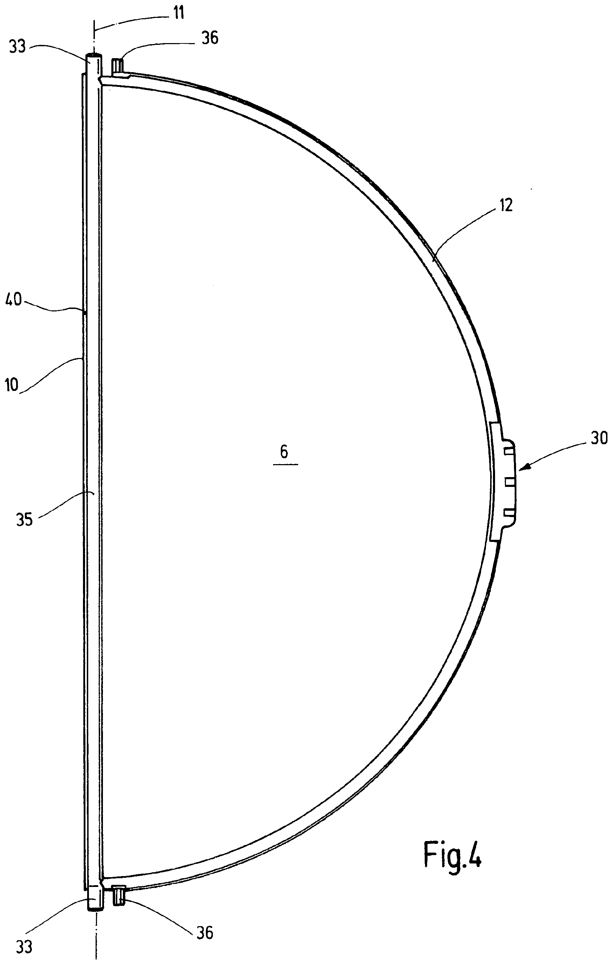

In der Figur 4 ist eine Draufsicht auf die Absperrklappe 6 gezeigt. Deutlich ist der verdickte Klappenrand 12 und der Gegenanschlag 30 erkennbar. Ferner sind zur Ausbildung der Schwenkachse 11 zwei Achsstutzen 33 ersichtlich, die über eine Randzonenverdickung 35, die sich benachbart zum Außenumrissbereich 10 über dessen gesamte Länge erstreckt, verbunden sind. Die Randzonenverdickung 35 sorgt für mechanische Stabilität. Sie befindet sich nicht direkt am Außenumrissbereich 10, sondern geringfügig beabstandet dazu, da der Außenumrissbereich 10 von einem Klappenrandstreifen 40 gebildet wird, der für ein optimales Dichten in Schließstellung der benachbarten Absperrklappen 6, 7 sorgt. Die Durchmesser der beiden Achsstutzen 33 sind gleich groß ausgebildet. Neben den Achsstutzen 33 befindet sich jeweils mit Abstand ein Offenstellungsanschlag 36, der einen Klappenanschlag 45 bildet und auch deutlich aus der Figur 3 hervorgeht. Die Figur 3 verdeutlicht den Bereich der Lagerung der Absperrklappen 6 und 7. Der Offenstellungsanschlag 36 besitzt einen Vorsprung 37, der in Offenstellung der Absperrklappe 6 auf eine einen Klappengegenanschlag 46 bildende Stirnwandung 38 der Wandung 18 des Luftwegs 4 linienartig oder punktartig aufsetzt und auf diese Art und Weise eine weitere Öffnungsbewegung verhindert. Die Stirnwand 38 erstreckt sich in Richtung der Längserstreckung des Luftkanals 3, also in axialer Richtung. Der maximale Öffnungswinkel Φ ist <90° (Figur 3) ausgebildet. Er beträgt vorzugsweise 75°. In der Schließstellung der Absperrklappen 6 und 7 liegt der jeweilige Offenstellungsanschlag 36 mit seinem Vorsprung 37 in jeweils einer Rand-Aufnahmeausnehmungen 39 der Wandung 18 des Luftwegs 4 berührungslos ein. Der Achsstutzen 33 wird beim Einsetzen der Absperrklappe 6 in eine Lagerbohrung 41 der Wandung 18 eingeschoben. Der gegenüberliegende Achsstutzen 33 wird in eine entsprechende Lagerbohrung 41 der Wandung 18 eingesteckt. Für das Einstecken wird die Absperrklappe 6 elastisch gebogen; nach dem Einstecken federt sie in ihre ursprüngliche Ausgangslage zurück. Entsprechendes gilt für das Einstecken der beiden Achsstutzen 34 der Absperrklappe 7 in Lagerbohrungen 42.

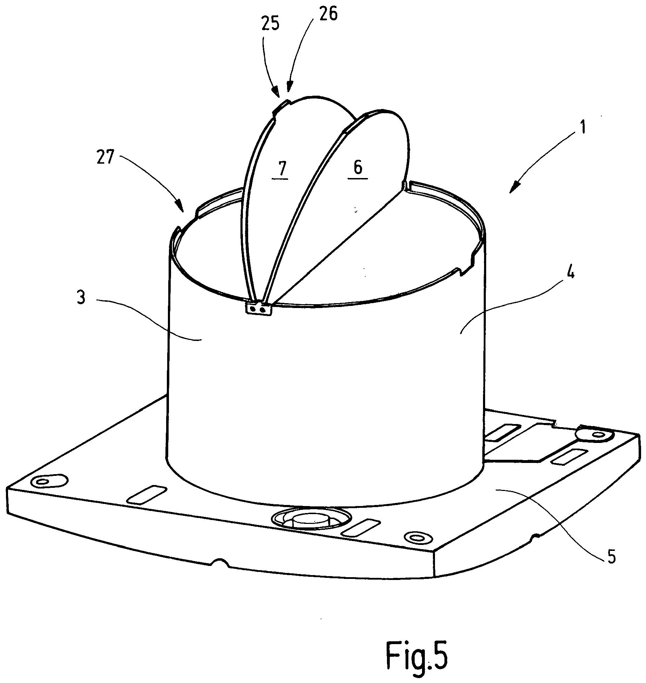

Der erfindungsgemäße Luftkanal 3 mit Rückschlagklappenvorrichtung 8 eignet sich sowohl für einen horizontalen Einbau, wie anhand der Figuren 1 und 2 bereits beschrieben, als auch für einen Deckeneinbau, wie er aus der Figur 5 hervorgeht. Bei der Stellung der Figur 5, die einen Deckenventilator zeigt, ist auch die erwähnte Schräglage der Drehachsen 11 der Absperrklappen 6 und 7 (Maß a; Maß b) vorhanden, für das durch Gravitation erfolgende Schließen der Klappen 6 und 7 jedoch nicht erforderlich, da selbst bei einer nicht vorhandenen Schrägstellung das Klappengewicht der jeweiligen Absperrklappe 6, 7 die Schließkraft herbeiführt.

Unabhängig vom jeweiligen Ausführungsbeispiel beträgt der Mindestdruck zum Öffnen bis zum Erreichen der maximalen Offenstellung der Absperrklappen 6, 7 etwa 2 bis 3 Pa. Die Anordnung der beiden Absperrklappen 6 und 7 ist derart gewählt, dass sie sich in ihren Offenstellungen nicht berühren. Die beiden Absperrklappen 6, 7 sind identisch ausgebildet, sodass eine einfache Fertigung und Montage in beliebiger Lage möglich ist. Durch die endseitige Anordnung der Absperrklappen 6 und 7 am Luftkanal 3 ist eine gute Zugänglichkeit gegeben. Durch das Spiel zwischen den Klappenrändern und den Schließflächen ist eine erhöhte Reibung oder Blockierung vermieden. Selbst Verschmutzungen, wie Staub, Haarspray usw., führen nicht zu einer Fehlfunktion.

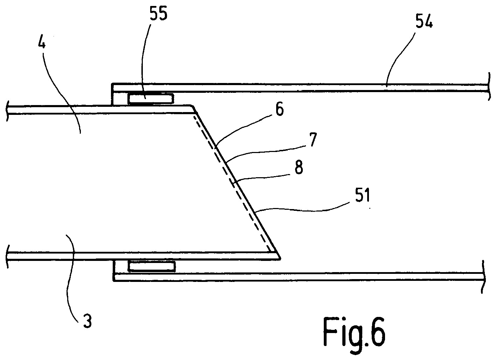

Die Figur 6 verdeutlicht den Anschluss eines mit Rückschlagklappenvorrichtung 8 versehenen Luftkanals 3 an einem Lüftungskanal 54. Deutlich ist auch das abgeschrägte Ende 51 des Luftkanals 3 erkennbar. Der Lüftungskanal 54 weist - ebenso wie der Luftkanal 3 - einen kreisförmigen Querschnitt auf, wobei er einen größeren Durchmesser als der Luftkanal 3 besitzt. Hierdurch kann er axial auf den Luftkanal 3 unter Zwischenschaltung einer Ringdichtung 55 dichtend aufgeschoben werden. Es ist erkennbar, dass aufgrund des großen Durchmessers des Lüftungskanals 54 die Absperrklappen 6 und 7 der Rückschlagklappenvorrichtung 8 - auch in maximaler Offenstellung - nicht in ihrer Bewegung behindert werden.

## Patentansprüche

1. Luftkanal (3) mit Rückschlagklappenvorrichtung (8) zum Verschließen eines Luftwegs (4) des Luftkanals (3), mit zwei Absperrklappen (6,7), deren Schwenkachsen (11) benachbart zueinander liegen und die von einer im Luftweg (4) strömenden Luftströmung entgegen einer Schließkraft geöffnet werden, wobei der Luftkanal (3) ein zu seiner Längserstreckung abgeschrägt verlaufendes Ende (51) aufweist und die beiden Absperrklappen (6,7) an dem Ende (51) angeordnet sowie - in Einbaulage des Luftkanals (3) - aufgrund des abgeschrägten Endes (51) zur Vertikalen derart geneigt angeordnet sind, dass eine Gewichtskraftkomponente ihres Gewichts die Schließkraft erzeugt, wobei maximalen Öffnungsstellungen der Absperrklappen (6,7) durch Anlage von Klappenanschlägen (45) der Absperrklappen (6,7) an Klappengegenanschlägen (46) des Luftwegs (4) definiert sind und Anschlagvorrichtungen (26) die Schließstellungen der Absperrklappen (6,7) mit an einer Wandung (18) des Luftwegs (4) angeordneten Anschlägen (29) und mit an den Absperrklappen (6,7) vorgesehenen, in Schließstellung gegen die Anschläge (29) tretenden Gegenanschlägen (30) definieren, **dadurch gekennzeichnet, dass** die Absperrklappen (6,7) jeweils einen verdickten Klappenrand (12) und zur Ausbildung einer Schwenkachse (11) zwei, im Durchmesser gleichgroße, über eine Randzonenverdickung (35) verbundene Achsstutzen (33) aufweisen, wobei die Randzonenverdickungen (35) sich benachbart mit Abstand zu einem Außenumrissbereich (10) der jeweiligen Absperrklappe (6,7) über dessen gesamte Länge erstrecken, wobei die Außenumrissbereiche (10) jeweils einen Klappenrandstreifen (40) bilden, der für ein optimales Dichten in Schließstellung der benachbarten Absperrklappe (6,7) sorgt, und wobei sich neben den Achsstutzen (33) jeweils mit Abstand ein einen der Klappenanschläge (45) bildender Offenstellungsanschlag (36) befindet, der einen Vorsprung (37) besitzt, der in Offenstellung der jeweiligen Absperrklappe (6,7) jeweils auf eine einen der Klappengegenanschläge (46) bildende Stirnwandung (38) der Wandung (18) des Luftwegs (4) linienartig oder punktartig aufsetzt, wobei die Stirnwand (38) sich in Richtung der Längserstreckung des Luftkanals (3), also in axialer Richtung, erstreckt, wobei der maximale Öffnungswinkel (ϕ) der Absperrklappen (6,7) kleiner als 90° ist, in der Schließstellung der Absperrklappen (6,7) der jeweilige Offenstellungsanschlag (36) mit seinem Vorsprung (37) in jeweils einer Rand-Aufnahmeausnehmung (39) der Wandung (18) des Luftwegs (4) berührungslos einliegt, wobei jede der Absperrklappen (6,7) derart elastisch ausgebildet ist, dass diese mit dem einen der Achsstutzen (33,34) in eine Lagerbohrung (41,42) der Wandung (18) einsetzbar ist und der gegenüberliegende der Achsstutzen (33,34) in die entsprechende Lagerbohrung (41,42) der Wandung (18) unter elastischem Biegen der jeweiligen Absperrklappe (6,7) einsteckbar ist.

2. Luftkanal nach Anspruch 1, **dadurch gekennzeichnet, dass** die Klappenfläche, insbesondere Klappenebene, der sich in Schließstellung befindenden Absperrklappen (6,7) in einer oder etwa in einer von einer das Ende (51) bildenden Randkante (52) des Luftkanals (3) aufgespannten Fläche, insbesondere Ebene, liegt.

3. Luftkanal nach einem der vorhergehenden Ansprüche, **dadurch gekennzeichnet, dass** - in Einbaulage des Luftkanals (3) - die Abschrägung des Endes (51) und/oder die Neigung der Absperrklappen (6,7) derart ausgebildet ist, dass - in Luftströmungsrichtung des Luftkanals (3) betrachtet - der untere Bereich des Endes (51) und/oder der Absperrklappen (6,7) gegenüber dem oberen Bereich des Endes (51) und/oder der Absperrklappen (6,7) in Luftströmungsrichtung versetzt liegt, wobei eine Luftströmung in der genannten Luftströmungsrichtung zu einem Öffnen der Absperrklappen (6,7) führt.

4. Luftkanal nach einem der vorhergehenden Ansprüche, **dadurch gekennzeichnet, dass** die Schwenkachsen (11) der Absperrklappen (6,7) seitlich angeordnet sind und - in Einbaulage des Luftkanals (3) - gegenüber der Vertikalen derart geneigt verlaufen, dass ihr unterer Bereich gegenüber ihrem oberen Bereich in Luftströmungsrichtung versetzt liegt.

5. Luftkanal nach einem der vorhergehenden Ansprüche, **dadurch gekennzeichnet, dass** Anschlag (29) und Gegenanschlag (30) axial aufeinander treffen.

6. Luftkanal nach einem der vorhergehenden Ansprüche, **dadurch gekennzeichnet, dass** eine der Absperrklappen (6,7) mindestens ein Zusatzgewicht zur Vergrößerung der Gewichtskraftkomponente aufweist.

7. Luftkanal nach Anspruch 6, **dadurch gekennzeichnet, dass** das Zusatzgewicht durch einen verdickten und/oder versteiften Klappenrand (12) gebildet ist.

8. Luftkanal nach Anspruch 6 oder 7, **dadurch gekennzeichnet, dass** das Zusatzgewicht durch den Gegenanschlag (30) gebildet ist.

9. Luftkanal nach einem der vorhergehenden Ansprüche, **dadurch gekennzeichnet, dass** der Öffnungswinkel (ϕ) in der maximalen Öffnungsstellung der Absperrklappen (6,7) 60 bis 80° beträgt.

10. Luftkanal nach einem der vorhergehenden Ansprüche, **dadurch gekennzeichnet, dass** der Querschnitt des Luftkanals (3) kreisförmig, etwa kreisförmig, oval oder mehreckig, insbesondere rechteckig, ausgebildet ist und dass die beiden Absperrklappen (6,7) einen dem Querschnitt entsprechenden Grundriss aufweisen.

11. Luftkanal nach einem der vorhergehenden Ansprüche, **dadurch gekennzeichnet, dass** die beiden Absperrklappen derart dem Querschnitt des Luftwegs (4) zugeordnet sind, dass jede der Absperrklappen (6,7) einen Teilquerschnitt des Querschnitts öffnet beziehungsweise verschließt.

12. Luftkanal nach einem der vorhergehenden Ansprüche, **dadurch gekennzeichnet, dass** die Schwenkachsen (11) der zwei Absperrklappen (6,7) parallel zueinander liegen.

13. Luftkanal nach einem der vorhergehenden Ansprüche, **dadurch gekennzeichnet, dass** die beiden Absperrklappen (6,7) jeweils einen etwa halbkreisförmigen, einen Klappenrand (12) bildenden Au-ßenumrissbereich (9) aufweisen und zusammen den im Querschnitt kreisförmigen oder den im Querschnitt etwa kreisförmigen Luftweg (4) verschließen.

14. Luftkanal nach einem der vorhergehenden Ansprüche, **dadurch gekennzeichnet, dass** die beiden Absperrklappen (6,7) identisch ausgebildet sind.

15. Luftkanal nach einem der vorhergehenden Ansprüche, **dadurch gekennzeichnet, dass** der Luftkanal (3) ein Anschlusskanal eines Ventilators, insbesondere Wandeinbauventilators, ist.

16. Ventilator, insbesondere Wandeinbauventilator, mit einem Luftkanal (3) nach einem oder mehreren der vorhergehenden Ansprüche.

## Claims

1. Air duct (3) comprising a check valve device (8) for sealing an airway (4) of the air duct (3), comprising two shut-off flaps (6, 7), the pivot axes (11) of which are mutually adjacent and which are opened counter to a closing force by an airflow flowing in the airway (4), the air duct (3) comprising an end (51) extending bevelled with respect to the longitudinal extension thereof, and the two shut-off flaps (6, 7) being arranged at the end (51) and - in the installation position of the air duct (3) - being arranged at an inclination to the vertical as a result of the bevelled end (51) in such a way that a gravitational force component of the weight of said flaps generates the closing force, maximum opening positions of the shut-off flaps (6, 7) being defined by contact of flap stops (45) of the shut-off flaps (6, 7) against flap counter stops (46) of the airway (4), and stop devices (26) defining the closed positions of the shut-off flaps (6, 7) by way of stops (29), arranged on a wall (18) of the airway (4), and by way of counter stops (30), provided on the shut-off flaps (6, 7) and coming up against the stops (29) in the closed position, **characterised in that** the shut-off flaps (6, 7) each have a thickened flap edge (12) and, for forming a pivot axis (11), two axial adapters (33) of equal diameter connected via an edge zone thickening (35), the edge zone thickenings (35) extending adjacently at a distance from an outer peripheral region (10) of the associated shut-off flap (6, 7) over the entire length of said region, the outer peripheral regions (10) each forming a flap edge strip (40) which ensures optimal sealing in the closed position of the adjacent shut-off flap (6, 7), and an open position stop (36) which forms one of the flap stops (45) being positioned next to the axial adapters (33) at a distance in each case and having a projection (37) which, in each case, in the open position of the associated shut-off flap (6, 7), sits in a lineal or punctuate manner on an end wall (38), which forms one of the flap counter stops (46), of the wall (18) of the airway (4), the end wall (38) extending in the direction of the longitudinal extension of the air duct (3), in other words in the axial direction, the maximum opening angle (ϕ) of the shut-off flaps (6, 7) being less than 90°, the projection (37) of the associated open position stop (36) in each case lying contactlessly in an edge-receiving recess (39) of the wall (18) of the airway (4) in the closed position of the shut-off flaps (6, 7), each of the shut-off flaps (6, 7) being formed elastically in such a way that it can be inserted by means of one of the axial adapters (33, 34) into a bearing hole (41, 42) in the wall (18), and the opposite one of the axial adapters (33, 34) can be inserted into the corresponding bearing hole (41, 42) in the wall (18) with elastic bending of the associated shut-off flap (6, 7).

2. Air duct according to claim 1, **characterised in that** the flap area, in particular the flap plane, of the shut-off flaps (6, 7) located in the closed position is positioned in or approximately in an area, in particular a plane, spanned by a rim edge (52) of the air duct (3) which forms the end (51).

3. Air duct according to either of the preceding claims, **characterised in that** - in the installation position of the air duct (3) - the bevel of the end (51) and/or the inclination of the shut-off flaps (6, 7) are formed in such a way that - as viewed in the airflow direction of the air duct (3) - the lower region of the end (51) and/or of the shut-off flaps (6, 7) is offset from the upper region of the end (51) and/or of the shut-off flaps (6, 7), an airflow in said airflow direction resulting in the shut-off flaps (6, 7) opening.

4. Air duct according to any of the preceding claims, **characterised in that** the pivot axes (11) of the shut-off flaps (6, 7) are arranged laterally and - in the installation position of the air duct (3) - extend at an inclination to the vertical in such a way that the lower region thereof is offset from the upper region thereof in the airflow direction.

5. Air duct according to any of the preceding claims, **characterised in that** the stop (29) and the counter stop (30) strike one another axially.

6. Air duct according to any of the preceding claims, **characterised in that** one of the shut-off flaps (6, 7) has at least one additional weight for increasing the gravitational force component.

7. Air duct according to claim 6, **characterised in that** the additional weight is formed by a thickened and/or stiffened flap edge (12).

8. Air duct according to either claim 6 or claim 7, **characterised in that** the additional weight is formed by the counter stop (30).

9. Air duct according to any of the preceding claims, **characterised in that** the opening angle (ϕ) in the maximum opening position of the shut-off flaps (6, 7) is 60 to 80°.

10. Air duct according to any of the preceding claims, **characterised in that** the cross section of the air duct (3) is formed circular, approximately circular, oval or polygonal, in particular rectangular, and **in that** the two shut-off flaps (6, 7) have an outline corresponding to the cross section.

11. Air duct according to any of the preceding claims, **characterised in that** the two shut-off flaps are assigned to the cross section of the airway (4) in such a way that each of the shut-off flaps (6, 7) opens or closes a partial cross section out of the cross section.

12. Air duct according to any of the preceding claims, **characterised in that** the pivot axes (11) of the two shut-off flaps (6, 7) are mutually parallel.

13. Air duct according to any of the preceding claims, **characterised in that** the two shut-off flaps (6, 7) each have an approximately semi-circular outer peripheral region (9) forming a flap edge (12) and together seal the airway (4) having a circular cross section or having an approximately circular cross section.

14. Air duct according to any of the preceding claims, **characterised in that** the two shut-off flaps (6, 7) are formed identically.

15. Air duct according to any of the preceding claims, **characterised in that** the air duct (3) is a connection duct of a ventilator, in particular a wall-mounted ventilator.

16. Ventilator, in particular wall-mounted ventilator, comprising an air duct (3) according to one or more of the preceding claims.

## Revendications

1. Canal d'air (3) comportant un dispositif de clapet antiretour (8) pour fermer une voie d'air (4) du canal d'air (3), comprenant deux papillons (6, 7), dont les axes de pivotement (11) sont adjacents et qui sont ouverts contre une force de fermeture par un écoulement d'air s'écoulant dans la voie d'air (4), le canal d'air (3) comportant une extrémité (51) s'étendant en biais par rapport à son extension longitudinale et les deux papillons (6, 7) étant disposés sur l'extrémité (51) et, dans la position montée du canal d'air (3), disposés inclinés par rapport à la verticale en raison de l'extrémité (51) en biais de telle manière qu'une composante de force de pesanteur de leur poids génère la force de fermeture, des positions d'ouverture maximale des papillons (6, 7) étant définies par l'appui de butées de papillon (45) des papillons (6, 7) sur des contre-butées de papillon (46) de la voie d'air (4) et des dispositifs de butée (26) définissant les positions de fermeture des papillons (6, 7) avec des butées (29) disposées sur une paroi (18) de la voie d'air (4) et avec des contre-butées (30) prévues sur les papillons (6, 7), venant à la rencontre des butées (29) en position fermée, **caractérisé en ce que** les papillons (6, 7) comportent respectivement un bord de papillon (12) épaissi et deux embouts d'axe (33) de diamètre identique reliés par un épaississement de zone de bord (35) pour former un axe de pivotement (11), les épaississements de zone de bord (35) s'étendant adjacents à distance par rapport à une zone de contour extérieur (10) du papillon (6, 7) respectif sur toute sa longueur, les zones de contour extérieur (10) formant respectivement une bande de bord de papillon (40) qui assure une étanchéité optimale dans la position fermée du papillon (6, 7) adjacent, et une butée de position ouverte (36) formant une des butées de papillon (45) se trouvant à côté des embouts d'axe (33) respectivement à distance, ladite butée de position ouverte possédant une saillie (37), qui, dans la position ouverte du papillon (6, 7) respectif, se pose respectivement de manière linéaire ou ponctuelle sur une paroi frontale (38) formant une des contre-butées de papillon (46) de la paroi (18) de la voie d'air (4), la paroi frontale (38) s'étendant dans la direction de l'extension longitudinale du canal d'air (3), c'est-à-dire dans une direction axiale, l'angle d'ouverture (ϕ) maximal des papillons (6, 7) étant inférieur à 90°, la butée de position ouverte (36) respective logeant, dans la position fermée des papillons (6, 7), avec sa saillie (37) dans respectivement un évidement de réception de bord (39) de la paroi (18) de la voie d'air (4) sans contact, chacun des papillons (6, 7) étant réalisé élastique de telle manière qu'il peut être inséré avec l'un des embouts d'axe (33, 34) dans un alésage de palier (41, 42) de la paroi (18) et que l'embout d'axe (33, 34) opposé peut être enfoncé dans l'alésage de palier (41, 42) correspondant de la paroi (18) en fléchissant de manière élastique le papillon (6, 7) respectif.

2. Canal d'air selon la revendication 1, **caractérisé en ce que** la surface de papillon, en particulier le plan de papillon, des papillons (6, 7) se trouvant en position fermée se trouve dans une ou approximativement dans une surface, en particulier un plan, définie par une arête de bord (52) formant l'extrémité (51) du canal d'air (3).

3. Canal d'air selon l'une des revendications précédentes, **caractérisé en ce que**, dans la position montée du canal d'air (3), le biais de l'extrémité (51) et/ou l'inclinaison des papillons (6, 7) est réalisé(e) de telle manière que, vue dans le sens d'écoulement d'air du canal d'air (3), la zone inférieure de l'extrémité (51) et/ou des papillons (6, 7) est décalée dans le sens d'écoulement d'air par rapport à la zone supérieure de l'extrémité (51) et/ou des papillons (6, 7), un écoulement d'air dans ledit sens d'écoulement d'air entraînant une ouverture des papillons (6, 7).

4. Canal d'air selon l'une des revendications précédentes, **caractérisé en ce que** les axes de pivotement (11) des papillons (6, 7) sont disposés de manière latérale et, dans la position montée du canal d'air (3), s'étendent de manière inclinée par rapport à la verticale de telle manière que leur zone inférieure est décalée dans le sens d'écoulement d'air par rapport à leur zone supérieure.

5. Canal d'air selon l'une des revendications précédentes, **caractérisé en ce que** la butée (29) et la contre-butée (30) se rencontrent de manière axiale.

6. Canal d'air selon l'une des revendications précédentes, **caractérisé en ce qu'**un des papillons (6, 7) comporte au moins un poids supplémentaire pour augmenter la composante de force de pesanteur.

7. Canal d'air selon la revendication 6, **caractérisé en ce que** le poids supplémentaire est formé par un bord de papillon (12) épaissi et/ou renforcé.

8. Canal d'air selon la revendication 6 ou 7, **caractérisé en ce que** le poids supplémentaire est formé par la contre-butée (30).

9. Canal d'air selon l'une des revendications précédentes, **caractérisé en ce que** l'angle d'ouverture (ϕ) dans la position d'ouverture maximale des papillons (6, 7) est de 60 à 80°.

10. Canal d'air selon l'une des revendications précédentes, **caractérisé en ce que** la section transversale du canal d'air (3) est réalisée de forme circulaire, approximativement circulaire, ovale ou polygonale, en particulier rectangulaire et **en ce que** les deux papillons (6, 7) présentent un tracé correspondant à la section transversale.

11. Canal d'air selon l'une des revendications précédentes, **caractérisé en ce que** les deux papillons sont associés à la section transversale de la voie d'air (4) de telle manière que chacun des papillons (6, 7) ouvre ou ferme une section partielle de la section transversale.

12. Canal d'air selon l'une des revendications précédentes, **caractérisé en ce que** les axes de pivotement (11) des deux papillons (6, 7) sont parallèles entre eux.

13. Canal d'air selon l'une des revendications précédentes, **caractérisé en ce que** les deux papillons (6, 7) comportent respectivement une zone de contour extérieur (9) approximativement demi-circulaire formant un bord de papillon (12) et ferment ensemble la voie d'air (4) à section transversale circulaire ou à section transversale approximativement circulaire.

14. Canal d'air selon l'une des revendications précédentes, **caractérisé en ce que** les deux papillons (6, 7) sont réalisés de manière identique.

15. Canal d'air selon l'une des revendications précédentes, **caractérisé en ce que** le canal d'air (3) est un canal de raccordement d'un ventilateur, en particulier d'un ventilateur à montage encastré dans le mur.

16. Ventilateur, en particulier ventilateur à montage encastré dans le mur, comprenant un canal d'air (3) selon une ou plusieurs des revendications précédentes.
